# EUROPEAN PATENT APPLICATION

(11) **EP 2 671 744 A1**
(43) Date of publication of application: **11.12.2013**
(21) Application number: 13169502.5
(22) Date of filing: 28.05.2013
(51) Int. Cl.: B60K 6/10

(54) **Flywheel energy storage for vehicle propulsion**

(30) Priority: 05.06.2012 US 201213488624
(71) Applicant: Hamilton Sundstrand Corporation, Windsor Locks, CT 06096-1010 (US)
(72) Inventor: Ribarov, Lubomir A., West Hartford, CT Connecticut 06107 (US); Gieras, Jacek F., Glastonbury, CT Connecticut 06033 (US)
(74) Representative: Bridge, Kerry Ann

(57) **Abstract**

A propulsion system (10) includes a prime mover (14) for providing primary power to propel a vehicle (12); a flywheel energy storage device(18) for providing secondary power to propel the vehicle(12) when primary power is not being provided, wherein the flywheel energy storage device (18) stores power provided by the prime mover (14); and a controller (34) for commanding the prime mover (14) on and off.

## Description

### BACKGROUND

The present invention is related to propulsion systems, and in particular to a system and method for providing propulsion to a vehicle using a flywheel energy storage (FES) device.

Vehicles such as advanced military land vehicles require long-range autonomous power supplies to complete their missions in adverse ambient conditions and difficult terrains. With the changing military doctrine of terrorism, suburban warfare, and covert mission reconnaissance, the advanced unmanned ground vehicle (UGV) has come to require fully-integrated thermal power and communications. It is expected that such small UGVs can be employed in a variety of roles, such as minesweeping, explosives and chemical/biological agents detection, missile guidance, and active reconnaissance.

Unlike typical land vehicles where power is delivered to the power train continuously over long periods of time, advanced military UGVs typically operate in a "stop-and-go" pattern either probing the ground carefully for hidden mines, or checking the underbodies of parked vehicles in a busy city street for hidden items such as explosives, drugs, and chemical/biological agents. Therefore, it is desirable to provide a prime mover device that not only provides long autonomous operation, but also delivers high bursts of concentrated energy to provide torque to move the UGVs in this typical "stop-and-go" pattern.

### SUMMARY

A propulsion system includes a prime mover for providing primary power to propel a vehicle, a flywheel energy storage device for providing secondary power to propel the vehicle when primary power is not being provided, and a controller for commanding the prime mover on and off. The flywheel energy storage device stores power provided by the prime mover.

### BRIEF DESCRIPTION OF THE DRAWINGS

FIG. 1 is a block diagram illustrating a propulsion system according to an embodiment of the present invention.

FIG. 2 is a schematic diagram illustrating a flywheel energy storage (FES) device according to an embodiment of the present invention.

FIG. 3 is a flowchart illustrating a method of propelling a vehicle according to an embodiment of the present invention.

### DETAILED DESCRIPTION

The present invention is a propulsion system primarily intended for advanced military unmanned ground vehicles (UGVs), but also applicable to a wide range of other drive systems. This invention provides primary power with a conventional prime mover such as a gas turbine, a microturbine, or an internal combustion engine. The prime mover transmits torque to a flywheel energy storage (FES) device via a one-way or two-way torque transmission shaft. The FES device comprises a flywheel and a brushless machine on a shared axis driven by the torque transmission shaft. The brushless machine (operating as a generator) allows flywheel kinetic energy to be converted into electrical energy. Electrical energy can also be discharged through the brushless machine (operating as a motor) to drive the flywheel. The shared axis of the FES connects to a propulsion driveshaft, such as a driveshaft for wheels of a ground vehicle. Thus, stored energy in the FES device can be used to propel the vehicle when the prime mover is commanded off.

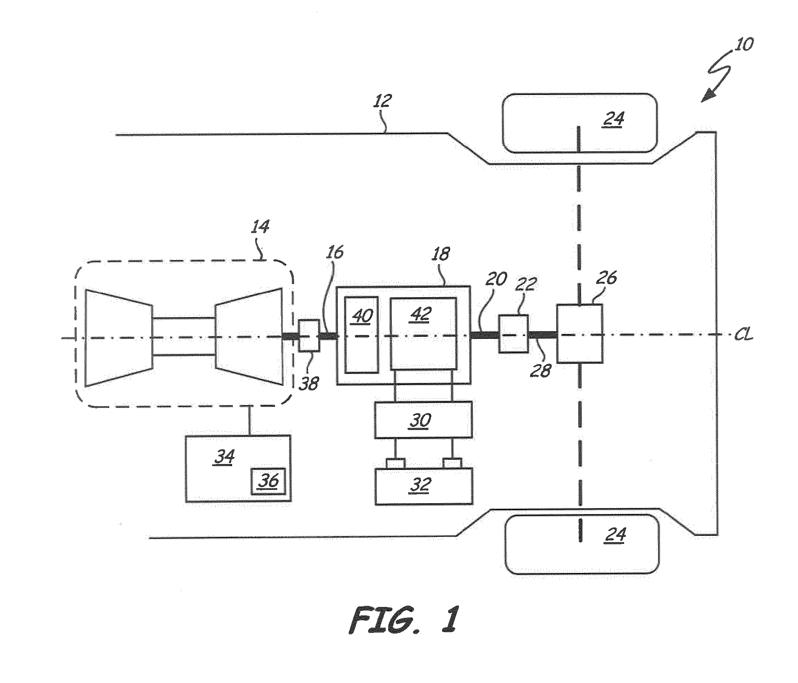

FIG. 1 is a block diagram illustrating a propulsion system 10 according to an embodiment of the present invention. System 10 includes vehicle 12, prime mover 14, torque transmission shaft 16, flywheel energy storage (FES) device 18, FES output shaft 20, step-down gear 22, wheels 24, transaxle/gearbox 26, driveshaft 28, battery charger 30, battery 32, controller 34, vehicle input/output (I/O) 36, electromagnetic clutch 38, flywheel 40, and permanent magnet (PM) brushless machine 42. Although illustrated as a ground vehicle, vehicle 12 may be any vehicle that is propelled by a prime mover such as, for example, an aircraft or a submarine. Prime mover 14 may be implemented as, for example, a gas turbine, a microturbine, an internal combustion engine, or any other prime mover known in the art. Battery 32 may be a conventional chemical battery, a supercapacitor, or any other functional equivalent. Battery charger 30 may be implemented as a solid state battery charger.

Prime mover 14 is commanded on and off using controller 34 which may be implemented, for example, as a microcontroller. In the present embodiment, controller 34 includes vehicle input/output 36. Vehicle input/output 36 is implemented using any sufficient wireless communication known in the art, such as a wireless transponder. This allows remote control of vehicle 12. Controller 34 contains digital logic to receive external commands and operate the vehicle accordingly, as well as transmit data regarding current operating conditions. In a separate embodiment, controller 34 may be implemented with digital logic to autonomously control propulsion of vehicle 12. Controller 34 may also be implemented to control aspects of the vehicle such as the direction of travel, speed and other common travel variables.

When commanding prime mover 14 on, FES device 18 may be used to initiate startup. FES device 18 includes flywheel 40 for storing kinetic energy, and PM brushless machine 42. PM brushless machine 42 can operate as a generator or a motor. During startup of prime mover 14, battery 32 provides electrical energy through battery charger 30 to drive FES device 18. PM brushless machine 42 of FES device 18 is used to convert the electrical energy from battery 32 into kinetic energy to turn flywheel 40 of FES device 18. Once FES device 18 is turning, torque is transmitted to prime mover 14 through torque transmission shaft 16. In the present embodiment, torque transmission shaft 16 is a typical rigid two-way shaft. In another embodiment, torque transmission shaft 16 may be a one-way torque transmission shaft (such as a shaft-within-a-shaft construction) which transmits torque only from prime mover 14 to FES device 18, and not vice versa. If utilizing a one-way shaft, FES device 18 cannot be used to start prime mover 14.

During primary power operation in which prime mover 14 is providing power to propel vehicle 12, torque from torque transmission shaft 16 energizes FES device 18. This spins flywheel 14 up to a high revolutions per minute (RPM), such as 30,000-50,000 RPM. The greater part of the mechanical energy supplied by prime mover 14 goes through FES device 18 to step-down gear 22, and then to transaxle/gearbox 26, driveshaft 28, and wheels 24 in order to propel vehicle 12. Transaxle/gearbox 26, driveshaft 28, and UGV wheels 24 may be replaced with other drive components for applications other than ground vehicle propulsion. When prime mover 14 is transmitting torque to FES device 18, PM brushless machine 42 acts as a generator to charge battery 32 through battery charger 30. Electricity from PM brushless machine 42 may also be used to power other electronics within vehicle 12. This provides redundancy for electric energy availability between PM brushless machine 42 and battery 32.

When prime mover 14 is commanded off by controller 34, power is provided to propel vehicle 12 from FES device 18. During this time, kinetic energy stored in flywheel 40 turns FES output shaft 20. This energy goes through FES output shaft 20 to step-down gear 22, and then to transaxle/gearbox 26, driveshaft 28, and wheels 24 in order to propel vehicle 12. Battery 32 may be used to provide further energy while prime mover 14 is commanded off. In this case, battery 32 provides electrical energy through battery charger 30 to PM brushless machine 42. PM brushless machine 42 acts as a motor to provide further energy to turn FES output shaft 20. While FES device 18 is providing power and prime mover 14 is commanded off, vehicle 12 creates very little noise, which is ideal for advanced military applications.

FES device 18 can be used to propel vehicle 12 for a period of time, for example, of 4-6 minutes. This is ideal for short time duty operations such as vehicle maneuvering, stealth operations, and supplying power to communications systems, targeting systems, and navigation systems. During this time, controller 34 may also operate electromagnetic clutch 38 in order to decouple prime mover 14 from FES device 18. This removes friction, allowing for more efficient use of the energy stored in FES device 18.

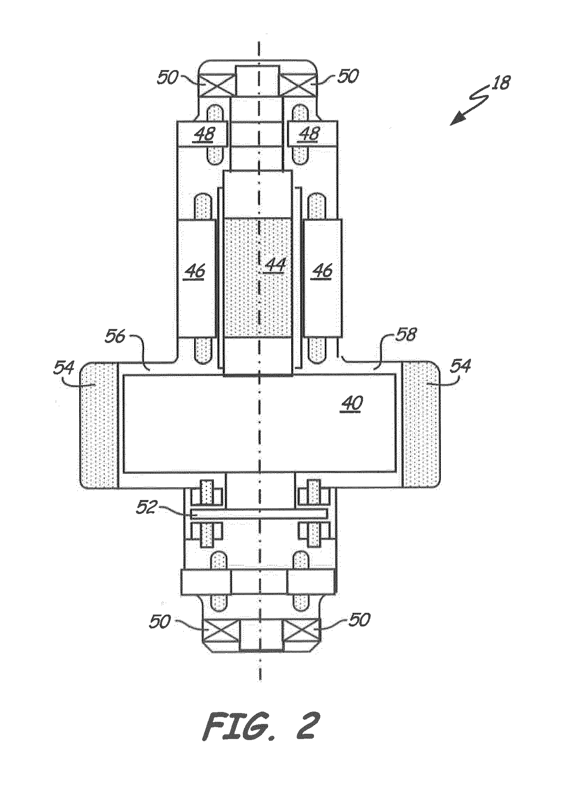

FIG. 2 is a schematic diagram illustrating FES device 18 according to an embodiment of the present invention. FES device 18 includes flywheel 40, rotor 44, stator 46, radial magnetic bearings 48, backup bearings 50, thrust magnetic bearing 52, burst shield 54, vacuum containment 56 and vacuum chamber 58. Flywheel 40 spins in vacuum chamber 58 in order to reduce air friction and extend energy storage time. Similarly, the use of magnetic bearings 48 and thrust magnetic bearing 52 reduces bearing energy loss, which maximizes the efficiency and energy stored in FES device 18. Rotor 44 and stator 46 comprise PM brushless machine 42. This PM brushless machine acts as a motor/generator. During primary operation (when prime mover 14 is providing power to propel vehicle 12), PM brushless machine 42 acts as a generator to convert kinetic energy from flywheel 40 into electric energy. When prime mover 14 is not providing power to propel vehicle 12, PM brushless machine 42 can act as a motor, receiving electric energy from battery 32 and converting it into kinetic energy to spin flywheel 40.

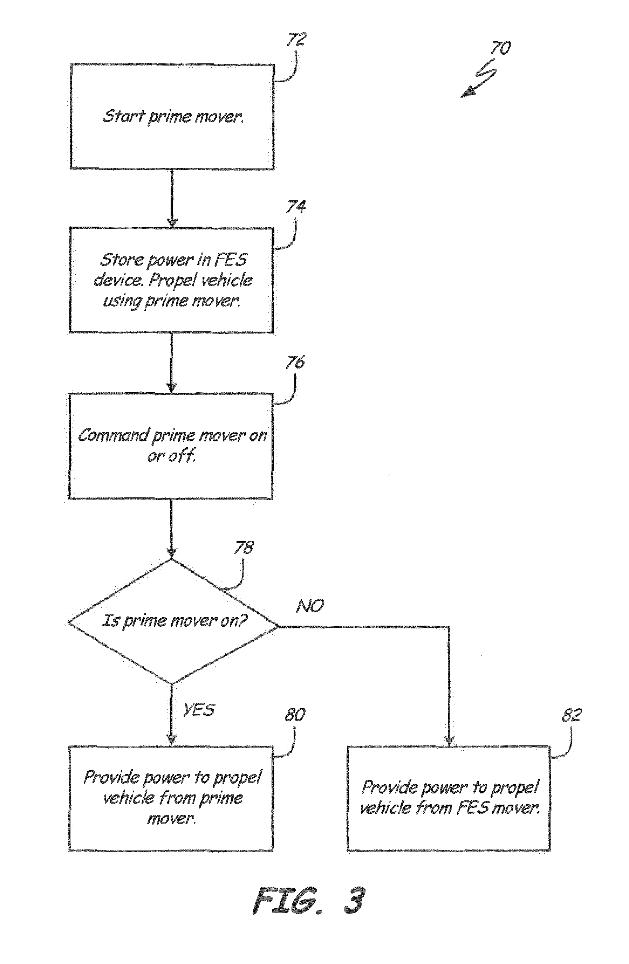

FIG. 3 is a flowchart illustrating a method 70 of providing power to propel a vehicle according to an embodiment of the present invention. At step 72, prime mover 14 is started using FES device 18. At step 74, FES device 18 stores power from prime mover 14 and prime mover 14 provides power to propel vehicle 12 through FES device 18. At step 76, controller 34 commands prime mover 14 on or off. At step 78, it is determined if power is being provided to propel vehicle 12 from prime mover 14 or from FES device 18. If prime mover 14 is providing power to propel vehicle 12, method 70 proceeds to step 80. If prime mover 14 is off, and FES device 18 is providing power to propel vehicle 12, method 70 proceeds to step 82. At step 80, prime mover 14 provides power to propel vehicle 12 through FES device 18. At step 82, FES device 18 provides stored power to propel vehicle 12. Electromagnetic clutch 38 is operated to decouple prime mover 14 from FES device 18..

In this way, the present invention describes a system and method for propelling a vehicle utilizing a flywheel energy storage device. Although the present invention has been described with reference to preferred embodiments, workers skilled in the art will recognize that changes may be made in form and detail without departing from the spirit and scope of the invention.

## Claims

1. A propulsion system (10) comprising:
a prime mover (14) for providing primary power to propel a vehicle (12);
a flywheel energy storage device (18) for providing secondary power to propel the
vehicle (14) when primary power is not being provided, wherein the flywheel energy storage (18) device stores power provided by the prime mover (14); and
a controller (34) for commanding the prime mover (14) on and off.

2. The system of claim 1, further comprising:
a battery (32) for providing power to the flywheel energy storage device (18) when the
flywheel energy storage device (18) is not receiving energy from the prime mover (14); and
a battery charger (30) for charging the battery (32) when the flywheel energy storage
device (18) is receiving energy from the prime mover (14).

3. The system of claim 2, wherein the battery (32) provides energy to the flywheel energy storage device (18) in order to start up the prime mover (14).

4. The system of claim 1, wherein the vehicle (12) is an unmanned ground vehicle.

5. The system of claim 1, wherein the controller (34) is controlled externally through an input/output (I/O) interface.

6. A method for propelling a vehicle (12), the method comprising:
providing power to propel the vehicle (12) using a prime mover (14);
storing energy from the prime mover (14) using a flywheel energy storage (FES) device (18); and
providing stored power to propel the vehicle using the FES device (18) when power from
the prime mover (14) is unavailable.

7. The method of claim 6, further comprising providing power to the FES device (18) using a battery (32) in order to startup the prime mover (14) prior to providing power to propel the vehicle (12) using the prime mover (14).

8. The method of claim 6, further comprising controlling the prime mover (14) on and off using a controller (34), wherein when the prime mover (14) is on, power is provided to propel the vehicle (12) using the prime mover (14) and when the prime mover (14) is off, stored power is provided to propel the vehicle (12) using the FES device (18).

9. The system of claim 1 or the method of claim 6, wherein the prime mover (14) is a gas turbine engine.

10. The method of claim 6, wherein providing stored power to propel the vehicle (12) using the FES device (18) further comprises providing electric power to the FES device using a battery (32).

11. The method of claim 10, wherein storing energy from the prime mover (14) includes the FES device (18) providing power to charge the battery (32).

12. The system of claim 1 or the method of claim 6, wherein the FES device comprises:
a flywheel (40); and
a permanent magnet (PM) brushless machine (42) for converting mechanical energy from
the flywheel (40) into electrical energy.

13. The system or method of claim 12, wherein the flywheel (40) is enclosed in a vacuum, and/or wherein the PM brushless machine (42) includes magnetic bearings.

14. The method of claim 6, wherein providing power to propel the vehicle (12) using the prime mover (14) comprises providing power from the prime mover (14) through the FES device (18).

15. The method of claim 6, wherein providing stored power to propel the vehicle (12) comprises decoupling the FES device (18) from the prime mover (14) using an electromagnetic clutch.
